# EUROPEAN PATENT APPLICATION

(11) **EP 2 332 679 A1**
(43) Date of publication of application: **15.06.2011**
(21) Application number: 09811580.1
(22) Date of filing: 04.09.2009
(51) Int. Cl.: B23C 5/08, B23C 5/22

(54) **SIDE CUTTER**

(30) Priority: 04.09.2008 JP 2008226682
(71) Applicant: Tungaloy Corporation, Iwaki-shi, Fukushima 970-1144 (JP)
(72) Inventor: HAKAMADA Yoshiaki, Fukushima 9701144 (JP)
(74) Representative: Vossius & Partner
(86) International application number: PCT/JP2009/065517
(87) International publication number: WO 2010/027055

(57) **Abstract**

A side cutter comprises a substantially disk-shaped or substantially ring-shaped cutter body (10), two or more peripheral cutting inserts (20) each having a cutting edge (21) protruding from a peripheral surface of the cutter body (10), and two or more corner cutting inserts (30) each having a cutting edge (31) protruding from an end surface of the cutter body (10), wherein the peripheral cutting insert (20) and the corner cutting insert (30) are arranged in the cutter body (10) such that the cutting edges (21, 31) adjacent to each other have rotational trajectories around a center axis line of the cutter body (10) to overlap, and at least a set of the peripheral cutting insert (20) and the corner cutting insert (30) rotational trajectories of which have a relationship to be spaced from each other are spaced from each other in a center axis line direction of the cutter body (10) and are arranged substantially in the same position in the circumferential direction of the cutter body (10).

## Description

### Technical Field

The present invention relates to a side cutter in which inserts are removably attached.

### Background Art

In a conventionally known side cutter, cartridges, each equipped with a plate-shaped cutting insert, are arranged and fixed on a peripheral portion of a cutter body formed of a ring-shaped body. The cutting inserts positioned respectively in the axial both ends and in the center of the cutting body on a peripheral surface thereof are arranged symmetrically to be shifted in cutting positions from each other, and each thereof is fixed from the flank side using an attaching hole by a screw with a head. (For example, refer to Patent Literature 1)

### Citation List

### Patent Literature

Patent Literature 1: Japanese Utility Model Laid-Open No. S49-110871(1974)

In the cutter described in the above Utility Model Literature, however, since the cutting inserts located on the peripheral surface in the axial both ends and in the center are shifted in cutting positions from each other, the number of the inserts capable of being attached on the cutter body is limited. Therefore, there occurs a problem that the cutter can not increase a cutting efficiency because of no possibility of an increase in the number of effective tooth.

The present invention is made for solving the foregoing problem and an object of the present invention is to provide a side cutter suitable mainly for grooving.

### Summary of Invention

In order to solve the above problem, in a side cutter according to the present invention, the invention according to claim 1 comprises a substantially disk-shaped or substantially ring-shaped cutter body, two or more peripheral cutting inserts each having a cutting edge protruding from a peripheral surface of the cutter body, and two or more corner cutting inserts each having a cutting edge protruding from an end surface of the cutter body, wherein the peripheral cutting insert and the corner cutting insert are arranged in the cutter body such that the cutting edges adjacent to each other in a circumferential direction of the cutter body have rotational trajectories around a center axis line of the cutter body to overlap, and at least a set of the peripheral cutting insert and the corner cutting insert are spaced from each other in a center axis line direction of the cutter body and are arranged substantially in the same position in the circumferential direction of the cutter body.

The peripheral cutting insert may be attached to the cutter body by means of a first cartridge and the corner cutting insert forming a pair with the peripheral cutting insert may be removably attached to the first cartridge by means of a second cartridge.

The second cartridge may protrude further in a radial direction and an axial direction of the cutter body than the first cartridge.

The side cutter according to the present invention may be provided with a single common chip pocket adjacent to at least a set of the peripheral cutting insert and the corner cutting insert in a forward side in the circumferential direction of the cutter body.

The peripheral cutting insert and the corner cutting insert may be located alternately in the circumferential direction.

### Brief Description of Drawings

[Fig. 1] Fig. 1 is a partially exploded perspective view showing a key part of a side cutter according to an embodiment to which the present invention is applied;
[Fig. 2] Fig. 2 is a front view showing the key part of the side cutter shown in Fig. 1;
[Fig. 3] Fig. 3 is a left side view including a partial cross section of the key part of the side cutter shown in Fig. 1;
[Fig. 4] Fig. 4 is a front view explaining a state of attaching a peripheral cutting insert and a corner cutting insert to a first cartridge;
[Fig. 5] Fig. 5 is a left side view showing the first cartridge shown in Fig. 4;
[Fig. 6] Fig. 6 is a plan view showing the first cartridge shown in Fig. 4;
[Fig. 7] Fig. 7 is a partially exploded perspective view showing a key part of a side cutter to which other corner cutting inserts are attached;
[Fig. 8] Fig. 8 is a perspective view showing a key part in a second embodiment;
[Fig. 9] Fig. 9 is a partially exploded perspective view showing the key part of the side cutter in Fig. 8;
[Fig. 10] Fig. 10 is a front view showing the key part of the side cutter shown in Fig. 8;
[Fig. 11] Fig. 11 is a plan view showing the key part of the side cutter shown in Fig. 8; and
[Fig. 12] Fig. 12 is a view showing the corner cutting insert (left side) as viewed from the front side.

### Description of Embodiments

As an embodiment of the present invention, a side cutter to which the present invention is applied will be explained with the accompanying drawings.

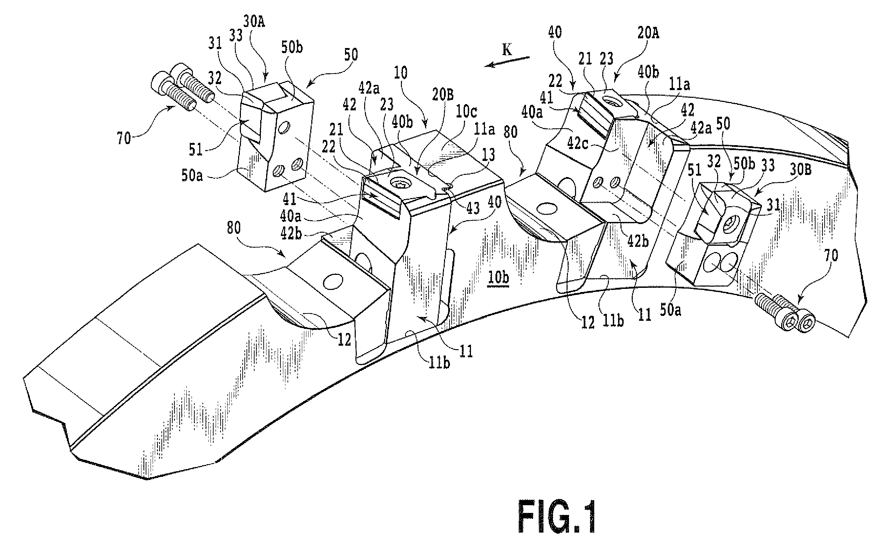

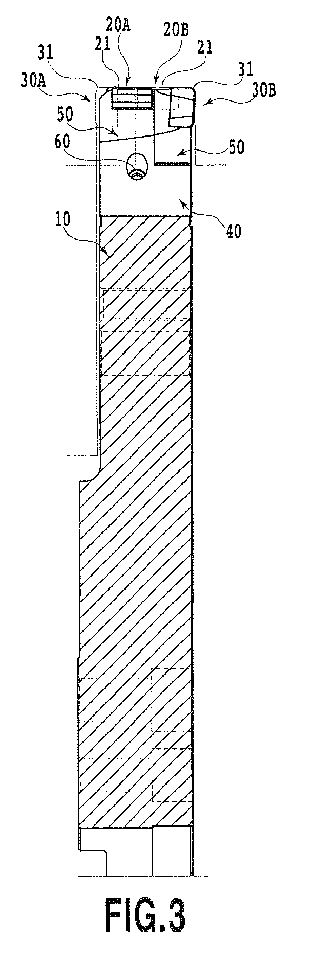

As shown in Fig. 1 to Fig. 3, this side cutter includes a substantially disk-shaped cutter body having a center axis and a plurality of inserts arranged along the circumferential direction on a peripheral surface 10c thereof. The inserts include a plurality of peripheral cutting inserts 20 and a plurality of corner cutting inserts 30. The peripheral cutting insert includes a peripheral cutting edge 21 as a cutting edge protruding from the peripheral surface 10c of the cutter body. The corner cutting insert 30 includes a corner cutting edge 31 as a cutting edge provided in an end portion side of the peripheral cutting edge surface 10c of the cutter body to protrude from the end portion. The peripheral cutting inserts 20A and 20B are arranged along the circumferential direction of the cutter body 10 to be positioned alternately and in a zigzag manner between one end face side and the other end face side of the cutter body 10. Likewise, the corner cutting inserts 30A and 30B are arranged along the circumferential direction of the cutter body 10 to be positioned alternately and in a zigzag (alternate) manner between one end face side and the other end face side of the cutter body 10.

As shown in Fig. 1, the peripheral cutting insert 20 is formed in a substantial parallelogram plate shape. Parallelogram faces as upper and lower faces are formed as flanks 23, and side faces extending between the upper and lower faces are formed as rake faces 22 where a cutting edge as a peripheral cutting edge 21 is formed in an intersecting ridgeline portion between the flank 23 and the rake face 22. The corner cutting insert 30 is formed in a substantially rectangular plate shape. The rectangular face as an upper face is formed as a flank 33, a side face extending between the upper and lower faces is formed as a rake face 32, and a cutting edge including the corner cutting edge 31 is formed in an intersecting ridgeline portion between the flank 33 and the rake face 32. A ridgeline of a corner portion provided in each end of both the cutting edges is formed as the arc-shaped corner cutting edge 31 as viewed from a direction opposing the rake face 32 of the corner cutting insert 30. The peripheral cutting insert 20 and the corner cutting insert 30 are provided with attaching holes 24 and 34 each penetrating through the upper and lower faces in a thickness direction. At least the cutting edge of each of the peripheral cutting insert 20 and the corner cutting insert 30 is formed of a hard material such as cemented carbide, cermet or ceramic or an ultra high pressure sintered compact such as polycrystal diamond or cubic boron nitride.

The peripheral cutting insert 20 and the corner cutting insert 30 each are attached to the cutter body 10 by means of the cartridge. The inserts 20 and 30 each are removably fixed to the cartridge by threading a screw member 80 such as a countersunk screw having a head capable of being engaged to an inner wall face of each of the attaching holes 24 and 34 into a female screw hole attached in the cartridge. The cartridge includes a large-sized first cartridge 40 and a small-sized second cartridge 50. The first cartridge 40 has a width substantially equal to that of the cutter body 10. The second cartridge 50 is fixed to a recessed portion 42 formed in the side portion of the first cartridge 40.

As shown in Fig. 1, the first cartridge 40 is inserted into a recessed groove 11 opened to the peripheral surface 10c and both end surfaces 10a and 10b of the cutter body and extending in the center axis line direction. A wall face of the recessed groove 11 directed in the cutter rotational direction K is formed as a circumferential support face 11a. A wall face of the recessed groove 11 directed in the cutter radial outside is formed as a radial support face 11b. The circumferential support face 11a and the radial support face 11b respectively contact and support the side faces of the first cartridge 40 opposing these support faces, and therefore the first cartridge 40 is positioned in the cutter rotational direction K and in the cutter radial direction. Further, a rising engagement face 13 protruding forward in the cutter rotational direction K is formed on the circumferential support face 11a of the recessed groove 11 to extend along a direction vertical to the center axis line of the cutter body 10. A notch engagement face 43 capable of being engaged to the rising engagement face 13 is formed on the side face of the first cartridge 40 contacting with the circumferential support face 11a. The first cartridge 40 is positioned exactly in the center axis line direction of the cutter body 10 by allowing the notch engagement face 43 to be engaged to the rising engagement face 13 in the circumferential support face 11a of the recessed groove. In addition, the first cartridge 40 is fixed by a screw member 60 screwed into a female screw hole formed in the circumferential support face of the recessed groove 11. The screw member 60 is, for example, a hexagon socket bolt with a head fitting in the cartridge 40. The female screw hole is inclined to a normal line of the circumferential support face to be directed toward the cutter radial inside and the rising engagement face 13. The first cartridge 40 is pressed against the circumferential support face, the radial support face and the rising engagement face of the recessed groove 11 to be accurately positioned and fixed. Further, the first cartridge 40 is, when a wedge member 90 located forward in the cutter rotational direction K of the cartridge 40 is fastened therein, pressed against the circumferential support face of the recessed groove 11 to be strongly fixed thereon.

The second cartridge 50 is inserted into a recessed portion 42 notched in the side face of the first cartridge 40 positioned to one end face side of the cutter body 10. A wall face of the recessed portion 42 directed in the cutter rotational direction K is formed as a circumferential support face 42a. A wall face directed in the cutter radial outside is formed as a radial support face 42b. A wall face of the cutter body directed in the center axis line direction is formed as an axial support face 42c. The support faces 42a, 42b and 42c respectively contact and support the side faces of the first cartridge 40 opposing these support faces, and therefore the first cartridge 40 is positioned. In addition, the second cartridge 50 is fixed by two screw members 70 screwed into female screw holes formed in the axial support face 42c of the recessed groove 42. Each of the two screw members 70 is, for example, a hexagon socket bolt with a head fitted in the cartridge 50. The female screw hole is inclined to a normal line of the axial support face 42c to be directed toward the circumferential support face side and the radial support face side, and therefore the second cartridge 50 is pressed against all the support faces 42a, 42b and 42c to be fixed thereon.

The peripheral cutting insert 20 is screwed by a screw member 80 in a insert seat 41 formed in an intersecting ridgeline portion between a side face directed in the cutter radial outside of the first cartridge 40 and a side face directed forward in the cutter rotational direction K. That is, the peripheral cutting insert 20 is attached by means of the first cartridge 40 to the cutter body 10. On the other hand, a insert seat 51 is formed in an intersecting ridgeline portion between a side face positioned at one end face side of the cutter body 10 of the second cartridge 50 and a side face directed forward in the cutter rotational direction K. The corner cutting insert 30 is screwed in the insert seat 51 by the screw members 70. That is, the corner cutting insert 30 is attached to the cutter body 10 by means of the second cartridge 50 and further by means of the first cartridge 40. In other words, the large-sized first cartridge 40 and the small-sized second cartridge 50 attached to the first cartridge 40 have a parent-child relation to each other.

As described above, the peripheral cutting inserts 20A and 20B and the corner cutting inserts 30A and 30B are arranged along the circumferential direction of the cutter body 10 to be positioned alternately and in a zigzag manner between one end surface side and the other end surface side of the cutter body 10. In a case where the peripheral cutting insert 20A at the one end face side of the cutter body 10 is attached in the first cartridge 40 of one side, the corner cutting insert 30B at the other end face side is attached in the second cartridge 50 attached integrally with the first cartridge 40 of the one side. In reverse, in a case where the peripheral cutting insert 20B at the other end face side is attached in the first cartridge 40 of the other side, the corner cutting insert 30A at the one end face side is attached in the second cartridge 50 attached integrally with the first cartridge 40 of the other side. In addition, the cartridge 40 of the one side and the cartridge 40 of the other side are alternately attached in the cutter body 10 along the circumferential direction in the same number respectively.

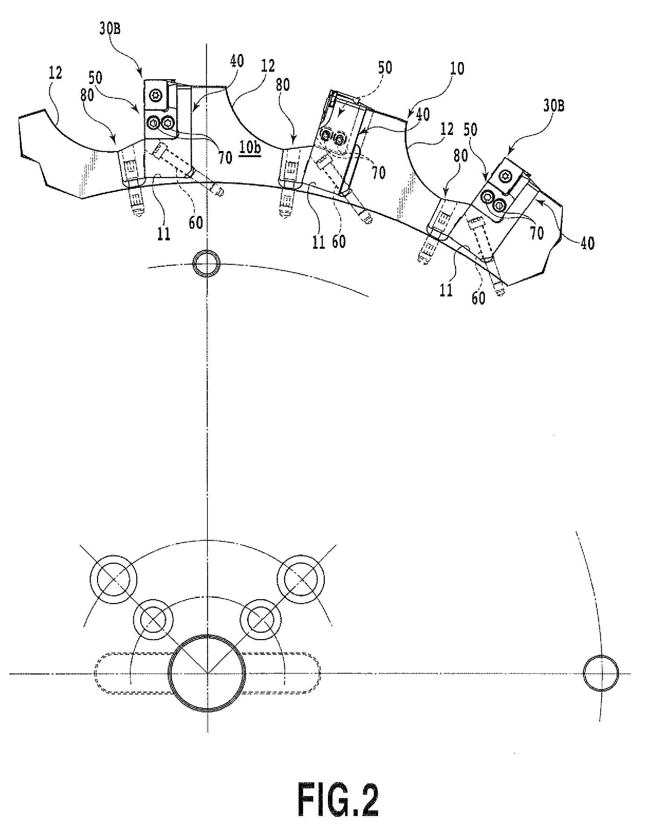

The peripheral cutting insert 20 and the corner cutting insert 30 attached in each first cartridge 40 are spaced from each other in the center axis line direction of the cutter body 10 as viewed from the side of the side cutter. The peripheral cutting insert 20 and the corner cutting insert 30 are arranged substantially in the same position in the circumferential direction of the cutter body 10 along the side face directed forward in the cutter rotational direction K of the first cartridge 40. Further, the peripheral cutting insert 20 and the corner cutting insert 30 have a single chip pocket 12 in common formed adjacent thereto in a forward side in the cutter rotational direction K. The chip pocket 12 is formed in a large size by notching the peripheral face 10c of the cutter body 10 in a recessed curved-face shape to be recessed inward. The chip pocket 12 is opened also to both the end surfaces 10a and 10b of the cutter body 10. The recessed curved face is connected to a side face directed in the cutter radial outside of the wedge member 90 adjacent to the first cartridge 40 forward in the cutter rotational direction K. The event that the peripheral cutting inserts and the corner cutting inserts (20A and 30B, and 20B and 30A) are arranged substantially in the same position in the circumferential direction of the cutter body 10 means the event that both the inserts (20A and 30B, and 20B and 30A) at least partially overlap from each other in the circumferential direction (refer to Fig. 1 and Fig. 2). In other words, the event that the peripheral cutting inserts and the corner cutting inserts (20A and 30B, and 20B and 30A) are arranged substantially in the same position in the circumferential direction of the cutter body 10 means the event that the peripheral cutting inserts and the corner cutting inserts overlap at least partially from each other as viewed from the center axis line direction of the cutter body. Particularly it is preferable that both the inserts (20A and 30B, and 20B and 30A) are located along the side face directed forward in the cutter rotational direction K of the first cartridge 40.

The side cutter described above is attached in a main spindle of a machine tool, rotated around the center axis line and fed in a direction vertical to the center axis line. A cutting edge of each insert attached in the cutter body 10 is contacted to a member to be cut for cutting. In addition, the side cutter forms a groove in a member to be cut to have a cross sectional configuration substantially similar to a rotational trajectory at the time of rotating the cutting edge of each insert 20 and 30 around the center axis line.

According to this side cutter, since the peripheral cutting inserts and the corner cutting inserts (20A and 30B, and 20B and 30A) are arranged substantially in the same position in the circumferential direction of the cutter body 10, the number of the inserts which can be installed in the cutter body 10 can be increased. Accordingly, the present side cutter can furthermore improve a cutting efficiency by increasing the number of effective tooth comparative to the conventional tool.

In the present side cutter, the peripheral cutting insert 20 is attached in the cutter body 10 by means of the first cartridge 40 and the corner cutting insert 30 forming a pair with the peripheral cutting insert 20 is removably attached in the first cartridge 40 by means of the second cartridge 50. By adopting such a configuration, it is realized to arrange the peripheral cutting insert and the corner cutting insert substantially in the same position in the circumferential direction of the cutter body 10. On the other hand, even if the peripheral cutting insert and the corner cutting insert are respectively attempted to be attached to the cutter body by means of different cartridges, this attempt is difficult to realize because of reduction in strength of the cutter body and the respective cartridges. However, the side cutter according to the present embodiment can arrange the peripheral cutting insert and the corner cutting insert substantially in the same position in the circumferential direction of the cutter body without reduction in strength of the cutter body 10, the first cartridge 40 and the second cartridge 50.

Furthermore, the peripheral cutting insert and the corner cutting insert (20A and 30B, and 20B and 30A) have the single chip pocket 12 in common formed adjacent to these inserts in a forward side in the cutter rotational direction K. Therefore, strength and rigidity in the vicinity to the peripheral face 10c of the cutter body are increased. Further, since the chip pocket 12 is formed in a large size to be opened to both the end surfaces 10a and 10b of the cutter body, it has a large capability of accommodating chips generated by each cutting edge of the peripheral cutting insert 20A and the corner cutting insert 30 and smoothly diskharges them to outside.

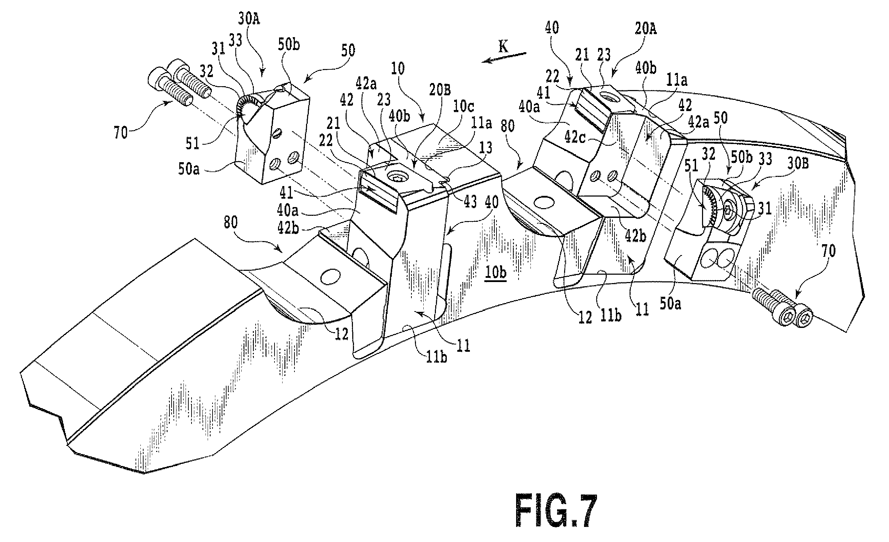

In the corner cutting insert 30, there is selected a curvature radius of the corner cutting edge corresponding to a radius of an arc-shaped portion of the corner portion in the groove to be cut. A side cutter exemplified in Fig. 7 has a curvature radius of the corner cutting edge larger than that of the side cutter shown in Fig. 1. Since such curvature radius of the corner cutting edge frequently changes depending on the groove to be cut, the corner cutting insert 30 results in being more frequently replaced than the peripheral cutting insert 20. However, removing the cutter body 10 from the main spindle of the machine tool to change the corner cutting insert 30 leads to remarkable deterioration of operability. Further, since in some cases, an outer dimension of the corner cutting insert 30 changes depending on a magnitude of the curvature radius of the corner cutting edge, it is necessary to replace the corner cutting insert 30 and the cartridge attached to the corner cutting insert 30 all together. In consideration of such circumstances, the corner cutting insert 30 is independently attached to the second cartridge 50, and the second cartridge 50 is further attached to the cutter body 10 by means of the first cartridge 40. With this configuration, upon changing the radius of the arc-shaped portion of the corner portion in the groove to be cut by the side cutter, the corner cutting insert 30 can be replaced simply by removing the small-sized second cartridge 50 alone. Even in a case of replacing the corner cutting insert 30 for the corner cutting insert 30 having a different outer dimension, it is only required to replace the second cartridge 50 alone. That is, a replacement job of the corner cutting insert 30 can be carried out very easily and in short hours without removing the cutter body 10 from the main spindle of the machine tool or removing the large-sized first cartridge 40 from the cutter body 10, and therefore the workability in replacing the corner cutting insert 30 can be largely improved. Further, the removal operation of the second cartridge 50 can be performed in a stationary state of the cutter body 10 without removing the cutter body 10 from the main spindle of the machine tool, since the screw member 70 for fixing the second cartridge 50 can be operated from the end face side of the cutter body 10. In this respect also, an improvement of the workability can be accomplished.

It is preferable that the second cartridge 50 protrudes in the cutter radial direction and in the center axis line direction more than the first cartridge 40. In other words, it is preferable that the first cartridge 40 is positioned more inward in the cutter radial direction and in the center axis line direction than the second cartridge 50. This is because the second cartridge 40 inhibits breakages such as chipping of the corner cutting insert 30 performing the cutting of the arc-shaped portion of the corner portion in the groove having a relatively high load to prevent such damage from spreading to the first cartridge 50. For the same reason, for preventing the damage from spreading to the cutter body 10, it is preferable that the cutter body 10 is positioned more inward in the cutter radial direction and in the center axis line direction than the first cartridge 40.

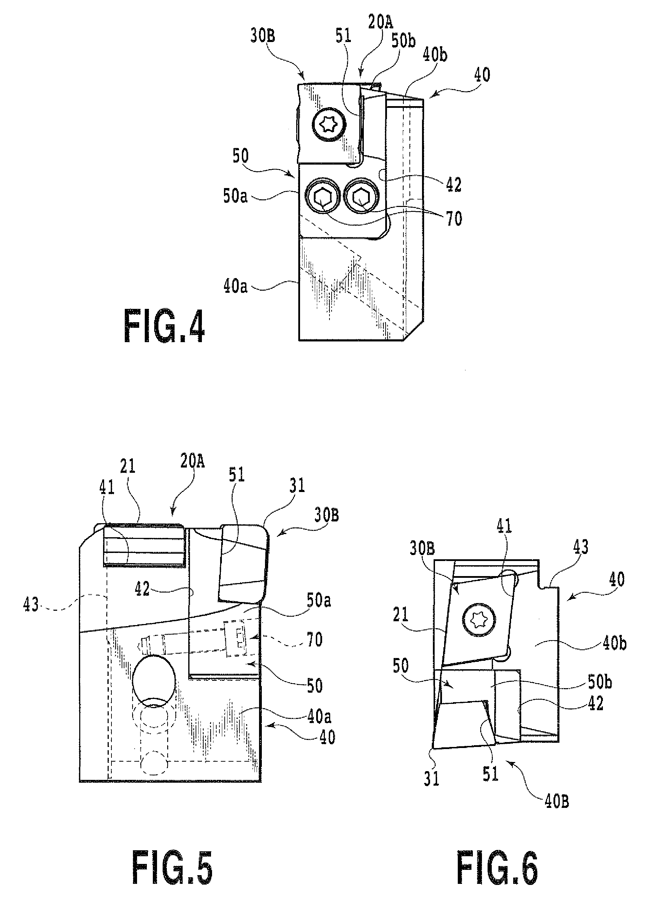

Further, as seen in Fig. 6, it is preferable that between the peripheral cutting inserts and the corner cutting inserts (20A and 30B, and 20B and 30A) arranged substantially in the same position in the circumferential direction of the cutter body 10, the respective cutting edge ridgelines are spaced (shifted) in the circumferential direction from each other. This is because by shifting timings each other when the respective cutting edge ridgelines contact with the member to be cut, a point of the rapid rise in the cutting resistance is dispersed to reduce loads to the first cartridge 40 and the cutter body 10. Further, in the present side cutter, the corner cutting edge 31 of the corner cutting insert and the peripheral cutting edge 21 of the peripheral cutting insert are inclined to the center axis line to be directed backward in the cutter rotating direction K, thus creating a positive axial rake angle. In consequence, in addition to the effect of reducing the load to the first cartridge 40 and the cutter body 10, by changing a direction of the cutting resistance to a direction intersecting obliquely with the circumferential direction of the cutter body 10, the corner cutting edge 31 of the corner cutting insert tends to be more easily engaged into a member to be cut and curls of chips are facilitated.

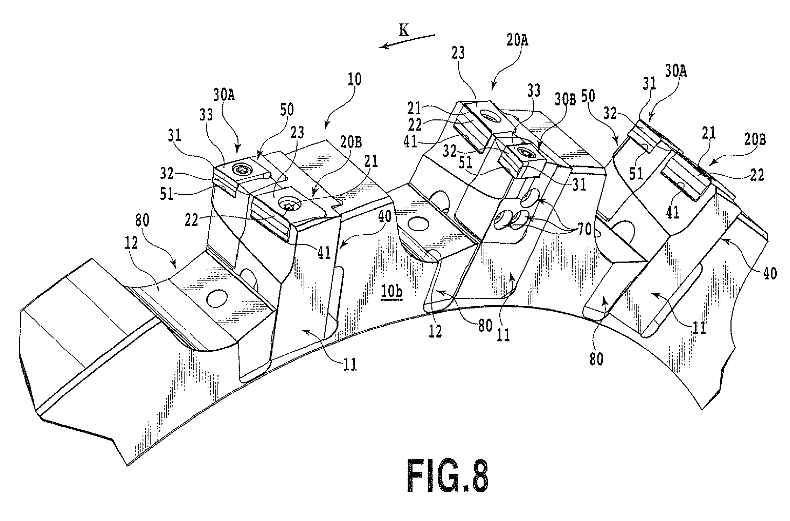

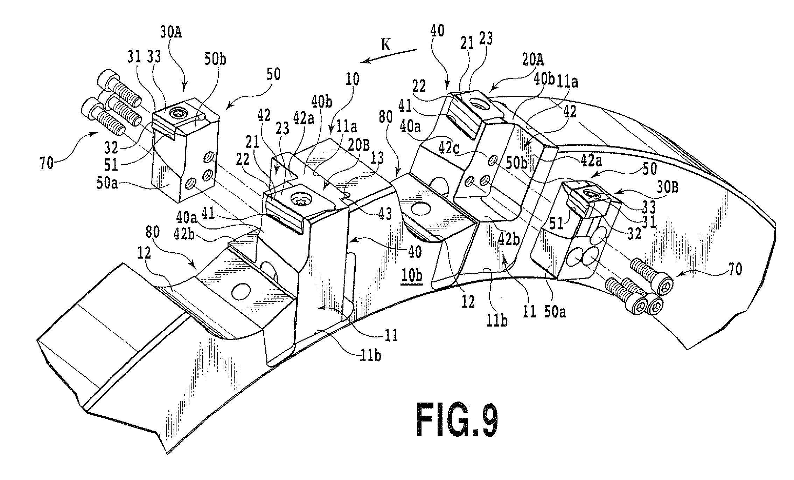

Fig. 8 to Fig. 12 show a second embodiment of the present invention.

In this embodiment, an attaching posture of the corner cutting insert 30 to the cutter body 10 is different from that of the embodiment explained previously. That is, while the corner cutting insert 30 of the previous embodiment is arranged in such a manner that the thickness direction is positioned along the center axis line direction of the cutter body 10, the corner cutting insert 30 of the present embodiment is arranged in such a manner that the thickness direction is positioned along the radial direction of the cutter body. (Refer to Fig. 8, Fig. 9 and Fig. 11.) As shown in Fig. 8, the corner cutting insert 30 is formed substantially in a parallelogram plate shape and either of a pair of parallelogram faces is formed as a flank 33, and side faces forming one of two pairs of side faces extending between upper and lower faces and opposing to each other are formed as rake faces 32. The cutting edge is formed in an intersecting ridgeline portion between the parallelogram face as the flank 33 and the side face as the rake face 32, and includes the arc-shaped corner cutting edge 31 formed in a sharp corner portion of the parallelogram face. The attaching hole 34 is formed to penetrate through a center portion of the parallelogram in the thickness direction. At least the cutting edge of the corner cutting insert 30 is formed of a hard material such as cemented carbide, cermet or ceramics or an ultra-high pressure sintered compact such as polycrystal diamond or cubic boron nitride.

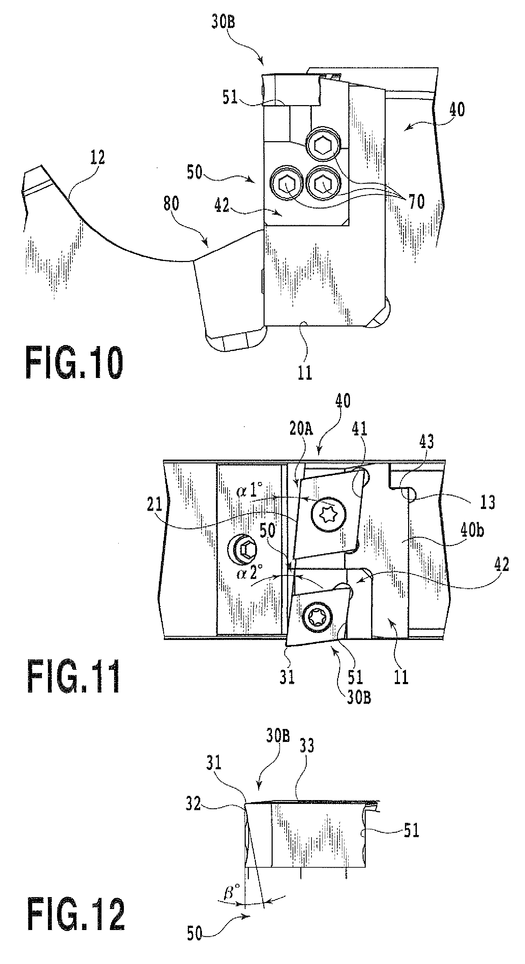

As illustrated in Fig. 11, the corner cutting insert 30 is located in a predetermined position of the second cartridge 50 to direct the parallelogram face as the flank 33 to the radial outside of the cutter body 10 and direct the side face as the rake face 32 to the cutter rotational direction K. The corner cutting edge 31 protrudes from the end surface of the cutter body 10. In addition, the corner cutting insert 30 is removably installed to the cartridge 50 by threading a screw member inserted into the hole into a female screw hole formed in the second cartridge 50.

The cutting edge of the corner cutting insert 30 is inclined to the center axis line of the cutter body 10 in such a manner as to gradually head backward in the cutter rotational direction from the corner cutting edge 31 toward an obtuse corner portion of the parallelogram face. In consequence, a positive axial rake angle is given to the cutting edge. In addition, as shown in Fig. 12, a breaker groove formed in a recessed curved shape on a cutting edge vertical cross section extends along the cutting edge on the rake face 32 of the corner cutting insert 30. Therefore, a radial rake angle is increased.

The second cartridge 50 is, similarly to the previous embodiment, fixed by using the screw members 70 such as bolts with hexagon holes having heads fitted in the second cartridge 50, and one screw member 70 is added in a position closer to the corner cutting edge 31 of the corner cutting insert 30 than in the previous embodiment as a result of changing a attaching posture of the corner cutting insert 30, and the second cartridge 50 is fixed by totally three screw members 70.

In the second embodiment explained above, by changing the attaching posture of the corner cutting insert 30 to the cutter body 10, a main component force acting in the cutter rotational direction K acts equally substantially over the entire cutting edge of the corner cutting insert 30. That is, the main component force acts on one section of the parallelogram of the corner cutting insert 30, and equally substantially over an entire side face connecting to the other section opposing the one section and contacting with the second cartridge 50. Therefore, the side face is stably supported and restrained by the second cartridge 50. In addition, the main component force acts on the screw member for fixing the corner cutting insert 30 in both sides in the center axis line directions of the cutter body 10, thereby restraining a behavior for the corner cutting insert 30 to rotate around an axis line of the screw member. Therefore, since the corner cutting insert 30 is stably and accurately fixed in the second cartridge 50 during cutting, deterioration of the cutting accuracy can be restricted.

Further, in the present embodiment, a screw member 70 is added in a position closer to the corner cutting edge 31 of the corner cutting insert 30 than in the previous embodiment and the second cartridge 50 is fixed by in total the three screw members 70, thus fixing the second cartridge more strongly. As a result, since the corner cutting insert 30 is accurately fixed to the cutter body 10, deterioration of the cutting accuracy can be restricted.

The present invention is not limited to the embodiments explained above, and may be applied to the configuration that an inner peripheral insert and a corner cutting insert are attached on a inner peripheral surface of a ring-shaped cutter body. In addition, the peripheral cutting insert may have three or more-edge lines, and in a case of four or more-edge lines, two peripheral cutting inserts may be attached to a single first cartridge.

## Claims

1. A side cutter comprising:
a substantially disk-shaped or substantially ring-shaped cutter body;
two or more peripheral cutting inserts each having a cutting edge protruding from a peripheral surface of the cutter body; and
two or more corner cutting inserts each having a cutting edge protruding from an end surface of the cutter body, wherein:
the peripheral cutting inserts and the corner cutting inserts are arranged in the cutter body such that the cutting edges adjacent to each other in a circumferential direction of the cutter body have rotational trajectories around a center axis line of the cutter body to overlap, and
at least a set of the peripheral cutting insert and the corner cutting insert are spaced from each other in a center axis line direction of the cutter body and are arranged substantially in the same position in the circumferential direction of the cutter body.

2. A side cutter according to claim 1, wherein:
the peripheral cutting insert is attached to the cutter body by means of a first cartridge and the corner cutting insert forming a pair with the peripheral cutting insert is removably attached to the first cartridge by means of a second cartridge.

3. A side cutter according to claim 2, wherein:
the second cartridge protrudes further in a radial direction and in an axial direction of the cutter body than the first cartridge.

4. A side cutter according to claim 1, wherein:
at least a set of the peripheral cutting insert and the corner cutting insert is provided with a single common chip pocket adjacent thereto in a forward side in the circumferential direction of the cutter body.

5. A side cutter according to claim 1, wherein:
the peripheral cutting insert and the corner cutting insert are located alternately in the circumferential direction.
